# EUROPÄISCHE PATENTANMELDUNG

(11) **EP 4 582 994 A1**
(43) Veröffentlichungstag der Anmeldung: **09.07.2025**
(21) Anmeldenummer: 24150067.7
(22) Anmeldetag: 02.01.2024
(51) Int. Cl.: G06F 30/23, B22F 10/85, B22F 12/90, G06F 30/27, G06N 3/0442, G06N 3/045, G06F 113/10, G06F 119/08, G06F 119/18

(54) **COMPUTERIMPLEMENTIERTES VERFAHREN UND VORRICHTUNG ZUR BESTIMMUNG EINER TEMPERATURVERTEILUNG UND VON VERFORMUNGSDATEN EINES ADDITIV GEFERTIGTEN BAUTEILS**

(71) Anmelder: Siemens Aktiengesellschaft, 80333 München (DE)
(72) Erfinder: Khalil, Mohamed, 81379 München (DE); Obst, Birgit, 80935 München (DE); Völkl, Harald, 90425 Nürnberg (DE)
(74) Vertreter: Siemens Patent Attorneys

(57) **Zusammenfassung**

Computerimplementiertes Verfahren zur Bestimmung einer Temperaturverteilung und von Verformungsdaten eines additiv gefertigten Bauteils mit den Verfahrensschritten:
- Einlesen (S1) von Eingabedaten (INP), wobei die Eingabedaten
o einen Leistungswert eines Druckkopfs eines 3D-Druckers zu einem vorgegebenen Zeitpunkt,
o einen Geschwindigkeitswert des Druckkopfs zum vorgegebenen Zeitpunkt,
o eine nächstfolgende Position des Druckkopfs nach einem vorgegebenen Zeitschritt und
o Temperaturverteilung und Verformungsdaten des Bauteils sowie Leistungswerte, Geschwindigkeitswerte und Positionen des Druckkopfs zu vorhergehenden Zeitpunkten
umfassen,
- Bereitstellen (S2) eines trainierten rekurrenten neuronalen Netzes (NN), das derart trainiert ist, in Abhängigkeit der Eingabedaten (INP) eine Temperaturverteilung und Verformungsdaten des Bauteils zu bestimmen,
- Ermitteln (S3) der Temperaturverteilung (T1) und der Verformungsdaten (V1) des Bauteils zum vorgegebenen Zeitpunkt in Abhängigkeit der Eingabedaten (INP) mittels des trainierten rekurrenten neuronalen Netzes (NN),
und
- Ausgeben (S4) der ermittelten Temperaturverteilung und die ermittelten Verformungsdaten (T1, V1) des Bauteils.

## Beschreibung

Die Erfindung betrifft ein computerimplementiertes Verfahren und eine Vorrichtung zur Bestimmung einer Temperaturverteilung und von Verformungsdaten eines additiv gefertigten Bauteils, sowie ein Computerprogrammprodukt.

Eine druckparallele Überwachung mittels computergestützter Simulation bei der Additiven Fertigung sowie Echtzeiteingriffe in Parametereinstellungen, insbesondere bei hohen Druckgeschwindigkeiten, erfordern sehr kurze Simulationszeiten. Bisher genutzte Finite-Elemente-Simulationen (FE-Simulationen) zur parameterabhängigen Temperatur- und Verformungsberechnung weisen hingegen sehr lange Berechnungszeiten auf und sind daher hierfür in der Regel nicht einsetzbar.

Bedingt durch Unsicherheiten im Druckprozess können insbesondere Verformungen, d.h. Abweichungen der Ist-Geometrie im Druck gegenüber der Nominalgeometrie, auftreten. Geometrieänderungen würden bei Anwendung der klassischen FE-Simulation ein Neuaufsetzen und Neuberechnen der gesamten Simulation erfordern. Dies führt wiederum zu mehr Rechenzeit. Die Analyse dieser Abweichung ist aber erst während des Druckprozesses möglich und erfordert somit ein paralleles, echtzeitfähiges Modell für Korrektureingriffe.

Es ist daher eine Aufgabe der Erfindung, eine computergestützte Simulation der Temperaturverteilung und Verformung für einen Prozess der additiven Fertigung mit reduzierten Rechenaufwand zu ermöglichen.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt.

Gemäß einem ersten Aspekt betrifft die Erfindung ein computerimplementiertes Verfahren zur Bestimmung einer Temperaturverteilung und von Verformungsdaten eines additiv gefertigten Bauteils mit den Verfahrensschritten:
- Einlesen von Eingabedaten, wobei die Eingabedaten
   ∘ einen Leistungswert eines Druckkopfs eines 3D-Druckers zu einem vorgegebenen Zeitpunkt,
   ∘ einen Geschwindigkeitswert des Druckkopfs zum vorgegebenen Zeitpunkt,
   ∘ eine nächstfolgende Position des Druckkopfs nach einem vorgegebenen Zeitschritt und
   ∘ eine Temperaturverteilung und Verformungsdaten des Bauteils, Leistungswerte, Geschwindigkeitswerte und Positionen des Druckkopfs zu vorhergehenden Zeitpunkten
   umfassen,
- Bereitstellen eines trainierten rekurrenten neuronalen Netzes, das derart trainiert ist, in Abhängigkeit der Eingabedaten eine Temperaturverteilung und Verformungsdaten des Bauteils zu bestimmen,
- Ermitteln der Temperaturverteilung und der Verformungsdaten des Bauteils zum vorgegebenen Zeitpunkt in Abhängigkeit der Eingabedaten mittels des trainierten rekurrenten neuronalen Netzes,
   und
- Ausgeben der ermittelten Temperaturverteilung und die ermittelten Verformungsdaten des Bauteils.

Gemäß einem zweiten Aspekt betrifft die Erfindung eine Vorrichtung zur Bestimmung einer Temperaturverteilung und von Verformungsdaten eines additiv gefertigten Bauteils, umfassend:
- eine erste Eingabeschnittstelle, die derart eingerichtet ist, Eingabedaten einzulesen, wobei die Eingabedaten
   ∘ einen Leistungswert eines Druckkopfs eines 3D-Druckers zu einem vorgegebenen Zeitpunkt,
   ∘ einen Geschwindigkeitswert des Druckkopfs zum vorgegebenen Zeitpunkt,
   ∘ eine nächstfolgende Position des Druckkopfs nach einem vorgegebenen Zeitschritt und
   ∘ eine Temperaturverteilung und Verformungsdaten des Bauteils, Leistungswerte, Geschwindigkeitswerte und Positionen des Druckkopfs zu vorhergehenden Zeitpunkten
   umfassen,
- eine zweite Eingabeschnittstelle, die derart eingerichtet ist, ein trainiertes rekurrentes neuronales Netz bereitzustellen, das derart trainiert ist, in Abhängigkeit der Eingabedaten eine Temperaturverteilung und Verformungsdaten des Bauteils zu bestimmen,
- eine Analyseeinheit, die derart eingerichtet ist, die Temperaturverteilung und die Verformungsdaten des Bauteils zu einem vorgegebenen Zeitpunkt in Abhängigkeit der Eingabedaten mittels des trainierten rekurrenten neuronalen Netzes zu ermitteln,
   und
- eine Ausgabeeinheit, die derart eingerichtet ist, die ermittelte Temperaturverteilung und die ermittelten Verformungsdaten des Bauteils auszugeben.

Es ist ein Vorteil der vorliegenden Erfindung, dass Temperaturdaten sowie Verformungsdaten eines additiv gefertigten Bauteils, beispielsweise parallel zum 3D-Druck und/oder zeitlich davon entkoppelt, mit geringem Rechenaufwand ermittelt werden können. Dazu wird anstatt einer rechenintensiven FE-Simulation ein trainiertes rekurrentes neuronales Netz genutzt. Dies ermöglicht insbesondere auch eine Berechnung in Echtzeit. Insbesondere werden die Temperaturverteilung und die Verformungsdaten unabhängig vom tatsächlichen 3D-Druck ermittelt.

Die Verwendung eines rekurrenten neuronalen Netzes hat den Vorteil, dass dieses auch Verbindungen zu vorangegangenen Layers/Ebenen hat und deshalb zeitliche Abfolgen besser als sog. Feedforward-Netze abbilden können. Somit können bei der Berechnung der Temperatur- und Verformungsdaten Werte zu vorangegangenen Zeitpunkten berücksichtigt werden.

In einer Ausführungsform des Verfahrens wurde das rekurrente neuronale Netz mit folgenden Verfahrensschritten trainiert:
- Bereitstellen von Trainingsdaten und vorgegebenen Zielwerten,
   wobei die Trainingsdaten
      o einen Leistungswert eines Druckkopfs eines 3D-Druckers zu einem vorgegebenen Zeitpunkt,
      ∘ einen Geschwindigkeitswert des Druckkopfs zum vorgegebenen Zeitpunkt,
      ∘ eine nächstfolgende Position des Druckkopfs zum nächstfolgenden Zeitpunkt und
      ∘ eine Temperaturverteilung und Verformungsdaten des Bauteils, Leistungswerte, Geschwindigkeitswerte und Positionen des Druckkopfs zu vorhergehenden Zeitpunkten
      umfassen,
   und wobei die vorgegebenen Zielwerte
      ∘ eine Temperaturverteilung des Bauteils zum vorgegebenen Zeitpunkt und
      ∘ Verformungsdaten des Bauteils zum vorgegebenen Zeitpunkt
      umfassen,
   wobei die Temperaturverteilung und die Verformungsdaten zu verschiedenen Zeitpunkten von einer Finite-Elemente-Simulation des 3D-Druckprozesses Bauteils bereitgestellt werden, und
- Anpassen der Gewichte des rekurrenten neuronalen Netzes mittels der Trainingsdaten und der Zielwerte derart, dass die Zielwerte in Abhängigkeit der Trainingsdaten reproduziert werden.

Dies hat insbesondere den Vorteil, dass für die Berechnung der Temperaturverteilung und der Verformungsdaten des Bauteils nicht die rechenintensive FE-Simulation sondern das weniger rechenintensive neuronale Netz genutzt wird. Dies erlaubt beispielsweise eine betriebsparallele Berechnung. Die FE-Simulation wird vorzugsweise vorab zur Generierung von Trainingsdaten und Zielwerten zum Trainieren des neuronalen Netzes genutzt.

In einer weiteren Ausführungsform können die Temperaturverteilung und die Verformungsdaten aus der Finite-Elemente-Simulation von einem von der Finite-Elemente-Simulation vorgegebenen Punktraster auf ein für das rekurrente neuronale Netz geeignetes konstantes Punktraster abgebildet werden.

Daten der FE-Simulation sind in der Regel netzbasiert. Es wird hiermit ermöglicht, Daten mit unterschiedlicher Verteilung auf ein konstantes Raster, das als Eingabe für das rekurrente neuronale Netz geeignet ist, abzubilden.

In einer Ausführungsform kann das für das rekurrente neuronale Netz geeignete konstante Punktraster abhängig von einem Bauraum eines vorgegebenen 3D-Druckers sein.

Vorzugsweise wird das Punktraster durch den üblicherweise begrenzten Bauraum des 3D-Druckers vorgegeben.

In einer Ausführungsform kann das rekurrente neuronale Netz ein Long-Short-Term-Memory-Netzwerk (LSTM) sein.

Dies hat den Vorteil, dass das sogenannte "vanishing/exploding gradients"-Problem (Problem der verschwindenden Gradienten) vermieden werden kann. In Deep Neural Networks können Gradienten bei Backpropagation kleiner werden, je weiter sie rückwärts durch die Schichten gehen, was das Training in den anfänglichen Schichten verlangsamen oder sogar stoppen kann. Dieses Problem wird als das "verschwindende Gradienten"-Problem bezeichnet und tritt besonders in tiefen Netzarchitekturen auf und betrifft auch "konventionelle" rekurrente neuronale Netze.

LSTMs nutzen hingegen Gate-Mechanismen, um den Informations- und Gradientenfluss zu kontrollieren. Dadurch wird das Problem der verschwindenden Gradienten verhindert und dem Netzwerk ermöglicht, Informationen über längere Sequenzen hinweg zu lernen und zu behalten.

In einer Ausführungsform kann das rekurrente neuronale Netz ein bidirektionales Long-Short-Term-Memory-Netzwerk sein.

Ein bidirektionales Long-Short-Term-Memory-Netzwerk hat eine "Look-ahead"-Fähigkeit, d.h. sie können mit zukünftigen/nach dem vorgegeben Zeitpunkt folgenden Temperaturverteilungen und Verformungsdaten aus der FE-Simulation trainiert werden, somit wird die Abfolge der Temperatur-/Verformungsverteilungen sowohl rückwärts als auch vorwärts trainiert. Damit kann eine genauere Vorhersage erzielt werden.

In einer Ausführungsform können die jeweiligen Eingabedaten von mindestens einem Sensor erfasst werden.

In einer Ausführungsform können die ausgegebene Temperaturverteilung und die Verformungsdaten bei der additiven Fertigung des Bauteils berücksichtigt werden.

Dies erlaubt beispielsweise eine echtzeitfähige Anpassung der Druckparameter.

In einer Ausführungsform kann eine Bauteilgeometrie des Bauteils in Abhängigkeit der ausgegebenen Temperaturverteilung und der Verformungsdaten überprüft werden und ein Prüfungsergebnis kann ausgegeben werden.

Insbesondere kann derart eine Bauteilgeometrie vor dem eigentlichen 3D-Druck überprüft werden. Beispielsweise kann ein Druckprozess erst bei einer positiven Evaluierung der Bauteilgeometrie, z.B. Abweichungen von der Nominalgeometrie liegen innerhalb vorgegebener Toleranzbereiche vor, freigegeben und gestartet werden.

In einer Ausführungsform kann die Bauteilgeometrie des Bauteils in Abhängigkeit der ausgegebenen Temperaturverteilung und der Verformungsdaten optimiert werden.

Beispielsweise kann die Bauteilgeometrie bei einer berechneten Abweichung der Bauteilgeometrie von der Nominalgeometrie außerhalb vorgegebener Toleranzbereiche und/oder bei Auftreten von zu hohen lokalen Temperaturwerten derart angepasst werden, dass die Verformung bzw. die Temperaturverteilung optimiert wird.

In einer Ausführungsform können optimierte Druckparameter in Abhängigkeit der ausgegebenen Temperaturverteilung und der Verformungsdaten bestimmt werden.

In einer Ausführungsform kann die additive Fertigung des Bauteils in Abhängigkeit der ausgegebenen Temperaturverteilung und der Verformungsdaten in Echtzeit überwacht werden.

Des Weiteren betrifft die Erfindung ein Computerprogrammprodukt, das direkt in einen programmierbaren Computer ladbar ist, umfassend Programmcodeteile, die bei der Ausführung des Programms durch einen Computer diesen veranlassen, die Schritte eines erfindungsgemäßen Verfahrens auszuführen.

Ein Computerprogrammprodukt kann beispielsweise auf einem Speichermedium, wie z.B. Speicherkarte, USB-Stick, CD-ROM, DVD, ein nichtflüchtiger/dauerhaftes Speichermedium (engl. Non-transitory storage Medium) oder auch in Form einer herunterladbaren Datei von einem Server in einem Netzwerk bereitgestellt oder geliefert werden.

Ausführungsbeispiele des erfindungsgemäßen Verfahrens und der Vorrichtung sind in den Zeichnungen beispielhaft dargestellt und werden anhand der nachfolgenden Beschreibung näher erläutert. Es zeigen:
- Fig. 1: zeigt ein Ausführungsbeispiel des Verfahrens zur Bestimmung einer Temperaturverteilung und von Verformungsdaten eines additiv gefertigten Bauteils;
- Fig. 2: zeigt ein Ausführungsbeispiel des Trainings des rekurrenten neuronalen Netzes;
- Fig. 3: zeigt ein weiteres Ausführungsbeispiel des Trainings des rekurrenten neuronalen Netzes; und
- Fig. 4: zeigt ein Ausführungsbeispiel einer Vorrichtung zur Bestimmung einer Temperaturverteilung und von Verformungsdaten eines additiv gefertigten Bauteils.

Einander entsprechende Teile sind in allen Figuren mit den gleichen Bezugszeichen versehen.

Insbesondere zeigen die nachfolgenden Ausführungsbeispiele lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

Auch sind insbesondere einem (einschlägigen) Fachmann in Kenntnis des/der Verfahrensanspruchs/Verfahrensansprüche alle im Stand der Technik üblichen Möglichkeiten zur Realisierung der Erfindung selbstverständlich bekannt, sodass es insbesondere einer eigenständigen Offenbarung in der Beschreibung nicht bedarf.

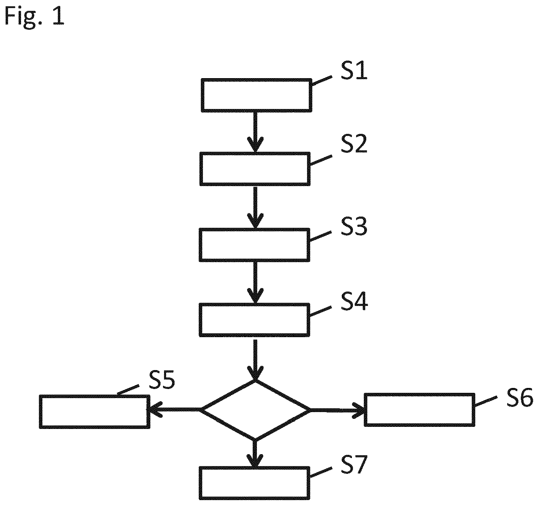

Figur 1 zeigt ein Ausführungsbeispiel eines computerimplementierten Verfahrens zur Bestimmung einer Temperaturverteilung und von Verformungsdaten gegenüber einer vorgegebenen Nominalgeometrie für ein additive Fertigung eines Bauteils. Insbesondere kann das Verfahren parallel zur additiven Fertigung des Bauteils in Echtzeit durchgeführt werden. Alternativ und/oder zusätzlich kann das Verfahren auch vor dem eigentlichen 3D-Druckprozess durchgeführt werden, um beispielsweise damit die Druckparameter und/oder die Bauteilgeometrie zu überprüfen und ggf. zu optimieren. Folglich kann das Verfahren genutzt werden, um die Temperaturverteilung und die Verformungsdaten eines digitalen Zwillings/eines Abbilds des Bauteils und/oder des (zeitlich parallel) real additiv gefertigten Bauteils zu bestimmen.

Das Verfahren umfasst folgende Verfahrensschritte:
In einem ersten Schritt S1 werden Eingabedaten eingelesen. Die Eingabedaten umfassen dabei folgende Druckparameter:
- einen Leistungswert eines Druckkopfs eines 3D-Druckers zu einem vorgegebenen Zeitpunkt,
- einen Geschwindigkeitswert des Druckkopfs zum vorgegebenen Zeitpunkt,
- eine nächstfolgende Position des Druckkopfs nach einem vorgegebenen Zeitschritt.

Die Druckparamater können dabei bei einer druckparallelen Ausführung des Verfahrens von den Einstellungen des 3D-Druckers übernommen werden. Alternativ können die Druckparameter Eingabedaten für die Modellberechnung sein.

Außerdem umfassen die Eingabedaten eine Temperaturverteilung und Verformungsdaten des Bauteils zu vorhergehenden Zeitpunkten. Diese Eingabedaten können beispielsweise von jeweils geeigneten Sensoren, beispielsweise während des 3D-Drucks, erfasst werden. Zusätzlich umfassen die Eingabedaten Leistungswerte, Geschwindigkeitswerte und Positionen des Druckkopfs zu diesen vorhergehenden Zeitpunkten. Die Anzahl der vorhergehenden Zeitpunkte kann als Parameter vorgegeben sein.

Es können verschiedene, bekannte 3D-Drucker genutzt werden. Demnach kann der Druckkopf beispielsweise einen Laser oder einen Elektronenstrahl umfassen. Eine drahtbasierte generative Fertigung mit Lichtbogen (WAAM) ist auch denkbar.

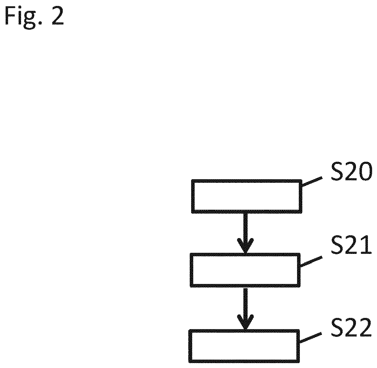

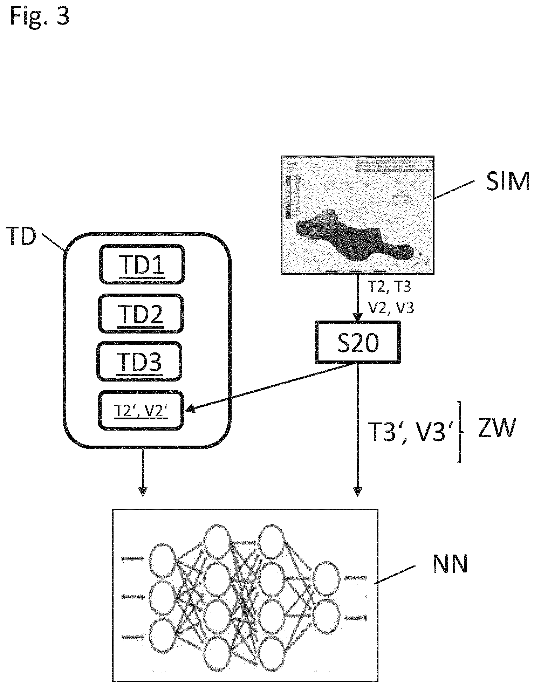

Ein weiterer Schritt S2 umfasst das Bereitstellen eines trainierten rekurrenten neuronalen Netzes. Das rekurrente neuronale Netz ist derart trainiert, in Abhängigkeit der Eingabedaten eine Temperaturverteilung und Verformungsdaten des Bauteils zum vorgegebenen Zeitpunkt zu bestimmen. Das Training des rekurrenten neuronalen Netz ist beispielhaft in den Figuren 2 und 3 dargestellt.

Als nächster Schritt S3 werden die Temperaturverteilung und die Verformungsdaten des Bauteils zum vorgegebenen Zeitpunkt in Abhängigkeit der Eingabedaten mittels des trainierten rekurrenten neuronalen Netzes ermittelt.

Im nächsten Schritt S4 werden die ermittelte Temperaturverteilung und die ermittelten Verformungsdaten des Bauteils ausgegeben.

Die Schritte S1 bis S4 können insbesondere iterativ durchgeführt werden, wobei die ermittelte Temperaturverteilung und die ermittelten Verformungsdaten zusammen mit Druckparametern zu einem nachfolgenden Zeitpunkt als Eingabedaten bereitgestellt werden.

Anschließend können die ermittelte Temperaturverteilung die ermittelten Verformungsdaten des Bauteils bei der additiven Fertigung des Bauteils berücksichtigt werden. So können die zeitabhängigen Temperaturverteilung und Verformungsdaten vor dem eigentlichen 3D-Druck ermittelt werden. Alternativ kann die Berechnung der Temperaturverteilung und Verformungsdaten auch betriebsparallel in Echtzeit erfolgen.

Beispielsweise kann damit eine Bauteilgeometrie des Bauteils in Abhängigkeit der ausgegebenen Temperaturverteilung und der Verformungsdaten überprüft werden und ein Prüfungsergebnis ausgegeben werden, Schritt S5.

Es ist weiter möglich, die Bauteilgeometrie des Bauteils in Abhängigkeit der ausgegebenen Temperaturverteilung und der Verformungsdaten zu optimieren, Schritt S6.

Außerdem können optimierte Druckparameter in Abhängigkeit der ausgegebenen Temperaturverteilung und der Verformungsdaten bestimmt werden, Schritt S7.

Figur 2 zeigt ein Ausführungsbeispiel des Trainings des rekurrenten neuronalen Netzes, das beispielsweise in einem Verfahren wie in Fig. 1 gezeigt, angewandt wird.

Das rekurrente neuronale Netz kann insbesondere ein Long-Short-Term-Memory-Netzwerk oder ein bidirektionales Long-Short-Term-Memory-Netzwerk sein.

Das Training umfasst folgende Verfahrensschritte:
Im Schritt S21 werden Trainingsdaten und vorgegebene Zielwerte bereitgestellt.

Die die Trainingsdaten umfassen dabei
∘ einen Leistungswert eines Druckkopfs eines 3D-Druckers zu einem vorgegebenen Zeitpunkt,
∘ einen Geschwindigkeitswert des Druckkopfs zum vorgegebenen Zeitpunkt,
∘ eine nächstfolgende Position des Druckkopfs zum nächstfolgenden Zeitpunkt und
∘ eine Temperaturverteilung und Verformungsdaten des Bauteils, sowie Leistungswerte, Geschwindigkeitswerte und Positionen des Druckkopfs zu vorhergehenden Zeitpunkten.

Die Zielwerte umfassen dabei
∘ eine Temperaturverteilung des Bauteils zum vorgegebenen Zeitpunkt und
∘ Verformungsdaten des Bauteils zum vorgegebenen Zeitpunkt.

Insbesondere werden Trainingsdaten und Zielwerte für eine Vielzahl von Zeitpunkten, vorzugsweise eine kontinuierliche Verteilung, bereitgestellt.

Die zeitabhängige Temperaturverteilung und die zeitabhängigen Verformungsdaten werden von einer computergestützten, parameterabhängigen Finite-Elemente-Simulation des 3D-Druckprozesses des Bauteils bereitgestellt. Vorzugsweise wird die Finite-Elemente-Simulation für den gesamten Druckprozess des Bauteils erstellt, so dass zeitabhängige thermomechanische Daten für den gesamten Druckprozess vorliegen. Die netzbasierten FE-Simulationsdaten werden vorzugsweise auf ein konstantes Punkteraster abgebildet und so für das Training bereitgestellt, Schritt S20. Das konstante Punkteraster kann beispielsweise abhängig vom Bauraum des genutzten 3D-Druckers sein.

Im nächsten Schritt S22 werden die Gewichte des rekurrenten neuronalen Netzes mittels der Trainingsdaten und der Zielwerte derart angepasst, dass die Zielwerte in Abhängigkeit der Trainingsdaten reproduziert werden.

Anschließend wird das derart trainierte rekurrente neuronale Netz bereitgestellt. Beispielsweise kann das trainierte rekurrente neuronale Netz in einer Datenstruktur gespeichert bereitgestellt werden.

Figur 3 zeigt ein weiteres Ausführungsbeispiel des Trainings des rekurrenten neuronalen Netzes, das beispielsweise in einem Verfahren wie in Fig. 1 gezeigt, angewandt wird. Vorzugsweise wird das rekurrente neuronale Netz NN für ein hinreichend ähnliches Bauteil und ein hinreichend ähnlichen 3D-Drucker trainiert.

Für das Training des rekurrenten neuronalen Netzes NN - in Fig. 3 lediglich skizzenhaft dargestellt - werden zunächst Trainingsdaten TD und Zielwerte ZW bereitgestellt. Das Training des erfolgt mittels thermomechanischer Simulationsdaten aus einer parameterabhängigen FE-Simulation. Die Parameter der FE-Simulation sind beispielsweise Druckparameter, wie z.B. Laserleistung, Druckgeschwindigkeit, Druckpfadinformation, usw., des entsprechenden 3D-Druckers, sowie eine Geometrie des zu druckenden Bauteils.

Thermomechanische Simulationsdaten, liegen je Zeitschritt vor und beinhalten thermische und mechanische zeitabhängige Daten, d.h. Temperaturdaten sowie Verformungsdaten/Verzug, die pfad- und geometrieabhängig sind. Dadurch sind aus einer oder wenigen FE-Simulationen viele repräsentative Daten ableitbar, wenn diese unterschiedliche Pfade, Temperaturen, Geschwindigkeiten und ggfs. weitere Parameter von Interesse beinhalten.

Die Trainingsdaten umfassen:
- einen Leistungswert TD1 eines Druckkopfs des 3D-Druckers zu einem vorgegebenen Zeitpunkt, wie z.B. einen Leistungswert eines Lasers,
- einen Geschwindigkeitswert TD2 des Druckkopfs zum vorgegebenen Zeitpunkt,
- eine nächstfolgende Position TD3 des Druckkopfs zum nächstfolgenden Zeitpunkt nach dem vorgegebenen Zeitpunkt und
- eine Temperaturverteilung T2' und Verformungsdaten V2` des Bauteils, Leistungswerte, Geschwindigkeitswerte und Positionen des Druckkopfs zu vorhergehenden Zeitpunkten, vorzugsweise für mindestens drei vorhergehende Zeitpunkte.

Die Zielwerte ZW umfassen:
- eine Temperaturverteilung T3' des Bauteils zum vorgegebenen Zeitpunkt und
- Verformungsdaten V3' des Bauteils zum vorgegebenen Zeitpunkt.

Die jeweilige Temperaturverteilung T2, T3 und die jeweiligen Verformungsdaten V2, V3 zu verschiedenen Zeitpunkten werden vorzugsweise von einer computergestützten Finite-Elemente-Simulation SIM des 3D-Druckprozesses des Bauteils bereitgestellt. Die Finite-Elemente-Simulation SIM kann beispielsweise vor dem Trainingsprozess durchgeführt werden, um die zeitabhängigen Trainingsdaten TD und zeitabhängigen Zielwerte ZW bereitzustellen.

Die Temperaturverteilung T2, T3 und die Verformungsdaten V2, V3 aus der Finite-Elemente-Simulation SIM werden dazu von einem von der Finite-Elemente-Simulation SIM vorgegebenen Punktraster auf ein für das rekurrente neuronale Netz geeignetes konstantes Punktraster abgebildet, siehe Schritt S20.

FE-Simulationsdaten sind netzbasiert, da FE-Netze sich je nach Geometrie ändern können. Dadurch liegt je Simulationsmodell eine unterschiedliche Anzahl lokal unterschiedlich verteilter Temperatur- und Verformungsdaten vor. Ein rekurrentes neuronales Netz hat ein konstantes Eingabeformat, nämlich die erste Schicht (Input Layer) mit konstanter Knotenanzahl. Daher werden die FE-Simulationsdaten auf ein 3D-Punkteraster mit konstanten Punktabständen, die parametrisch, je nach gewünschter Auflösung und bereitgestellter Netzfeinheit des FE-Simulationsmodells einstellbar sind, abgebildet.

Vorzugsweise richtet sich das konstante Raster nach dem begrenzten Bauraum des verwendeten 3D-Druckers.

Die Trainingsdaten umfassen zusätzlich zur Temperaturverteilung und der Verformungsdaten gegenüber der Nominalgeometrie des Bauteils auch die jeweils folgende Position des Druckkopfs und andere Informationen des Druckvorgangs, wie die vorhergehende Temperaturverteilung, die nächste Position des Druckkopfs, optional eine Aktivität des Druckkops (An/Aus) und eine Zeitinformation bis zur nächsten Position des Druckkopfs. Außerdem kann eine Information über die Folgeposition des Druckkopfs berücksichtigt werden. Beispielsweise kann derart eine Vorhersage über die Temperaturverteilung für das Bauteil in Abhängigkeit der Druckkopfposition in drei Dimensionen gemacht werden. Vorzugsweise sind für jeden zu trainierenden Zeitschritt mehrere vorhergehende Zeitschritte vorzugeben.

Das rekurrente neuronale Netz NN wird anschließend trainiert, indem für jeden zu analysierenden Zeitpunkt Gewichte des rekurrenten neuronalen Netzes NN mittels der Trainingsdaten TD und der Zielwerte ZW angepasst werden, so dass die Zielwerte in Abhängigkeit der Trainingsdaten reproduziert werden. Das trainierte rekurrente neuronale Netz NN kann anschließend zur Verwendung bereitgestellt werden.

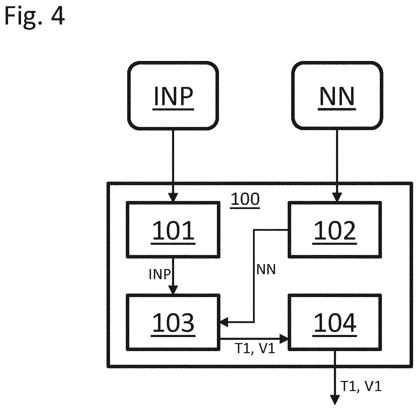

Figur 4 zeigt ein Ausführungsbeispiel einer Vorrichtung zur Bestimmung einer Temperaturverteilung und von Verformungsdaten eines additiv gefertigten Bauteils oder eines zu fertigenden Bauteils mittels 3D-Druck.

Die Vorrichtung 100 umfasst eine erste Eingabeschnittstelle 101, eine zweite Eingabeschnittstelle 102, eine Analyseeinheit 103 und eine Ausgabeeinheit 104. Außerdem kann die Vorrichtung 100 mindestens einen Prozessor umfassen. Die Komponenten 101-104 der Vorrichtung 100 sind vorzugsweise miteinander verknüpft, um insbesondere Daten miteinander austauschen zu können. Die Komponenten 101-104 können in Hardware und/oder Software ausgestaltet sein.

Die Vorrichtung 100 kann insbesondere mit einem 3D-Drucker verbunden sein, um beispielsweise Daten austauschen zu können.

Die erste Eingabeschnittstelle 101 ist derart eingerichtet, Eingabedaten INP einzulesen. Die Eingabedaten INP umfassen:
- einen Leistungswert des Druckkopfs des 3D-Druckers zu einem vorgegebenen Zeitpunkt,
- einen Geschwindigkeitswert des Druckkopfs zum vorgegebenen Zeitpunkt,
- eine nächstfolgende Position des Druckkopfs nach einem vorgegebenen Zeitschritt nach dem vorgegebenen Zeitpunkt und
- eine Temperaturverteilung und Verformungsdaten des Bauteils, Leistungswerte, Geschwindigkeitswerte und Positionen des Druckkopfs zu vorhergehenden Zeitpunkten des Druckprozesses.

Die Eingabedaten INP können insbesondere vom 3D-Drucker bereitgestellt werden. Alternativ können insbesondere die Temperaturverteilung und die Verformungsdaten aus einem vorherigen Berechnungsschritt stammen.

Die zweite Eingabeschnittstelle 102 ist derart eingerichtet, ein trainiertes rekurrentes neuronales Netz NN bereitzustellen, wobei das rekurrente neuronale Netz derart trainiert ist, in Abhängigkeit der Eingabedaten INP eine Temperaturverteilung T1 und Verformungsdaten V1 des Bauteils zu bestimmen.

Die Analyseeinheit 103 ist derart eingerichtet, die Temperaturverteilung T1 und die Verformungsdaten V1 des Bauteils zu einem vorgegebenen Zeitpunkt in Abhängigkeit der Eingabedaten INP mittels des trainierten rekurrenten neuronalen Netzes NN zu ermitteln.

Die Ausgabeeinheit 104, die derart eingerichtet ist, die ermittelte Temperaturverteilung T1 und die ermittelten Verformungsdaten V1 des Bauteils auszugeben.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Computerimplementiertes Verfahren zur Bestimmung einer Temperaturverteilung und von Verformungsdaten eines additiv gefertigten Bauteils mit den Verfahrensschritten:
- Einlesen (S1) von Eingabedaten (INP), wobei die Eingabedaten (INP)
∘ einen Leistungswert eines Druckkopfs eines 3D-Druckers zu einem vorgegebenen Zeitpunkt,
∘ einen Geschwindigkeitswert des Druckkopfs zum vorgegebenen Zeitpunkt,
∘ eine nächstfolgende Position des Druckkopfs nach einem vorgegebenen Zeitschritt und
∘ eine Temperaturverteilung und Verformungsdaten des Bauteils, Leistungswerte, Geschwindigkeitswerte und Positionen des Druckkopfs zu vorhergehenden Zeitpunkten
umfassen,
- Bereitstellen (S2) eines trainierten rekurrenten neuronalen Netzes (NN), das derart trainiert ist, in Abhängigkeit der Eingabedaten eine Temperaturverteilung und Verformungsdaten des Bauteils zu bestimmen,
- Ermitteln (S3) der Temperaturverteilung (T1) und der Verformungsdaten (V1) des Bauteils zum vorgegebenen Zeitpunkt in Abhängigkeit der Eingabedaten (INP) mittels des trainierten rekurrenten neuronalen Netzes (NN),
und
- Ausgeben (S4) der ermittelten Temperaturverteilung (T1) und die ermittelten Verformungsdaten (V1) des Bauteils.

2. Computerimplementiertes Verfahren nach Anspruch 1, wobei das rekurrente neuronale Netz mit folgenden Verfahrensschritten trainiert wurde:
- Bereitstellen (S21) von Trainingsdaten (TD) und vorgegebenen Zielwerten (ZW), wobei die Trainingsdaten (TD)
∘ einen Leistungswert (TD1) eines Druckkopfs eines 3D-Druckers zu einem vorgegebenen Zeitpunkt,
∘ einen Geschwindigkeitswert (TD2) des Druckkopfs zum vorgegebenen Zeitpunkt,
∘ eine nächstfolgende Position (TD3) des Druckkopfs zum nächstfolgenden Zeitpunkt,
und
o eine Temperaturverteilung (T2) und Verformungsdaten (V2) des Bauteils, Leistungswerte, Geschwindigkeitswerte und Positionen des Druckkopfs zu vorhergehenden Zeitpunkten
umfassen,
und wobei die vorgegebenen Zielwerte (ZW)
∘ eine Temperaturverteilung (T3) des Bauteils zum vorgegebenen Zeitpunkt und
∘ Verformungsdaten (V3) des Bauteils zum vorgegebenen Zeitpunkt
umfassen,
wobei die Temperaturverteilung (T2, T3) und die Verformungsdaten (V2, V3) zu verschiedenen Zeitpunkten von einer Finite-Elemente-Simulation (SIM) des 3D-Druckprozesses des Bauteils bereitgestellt werden,
und
- Anpassen (S22) der Gewichte des rekurrenten neuronalen Netzes mittels der Trainingsdaten und der Zielwerte derart, dass die Zielwerte in Abhängigkeit der Trainingsdaten reproduziert werden.

3. Computerimplementiertes Verfahren nach Anspruch 2, wobei die Temperaturverteilung (T2, T3) und die Verformungsdaten (V2, V3) aus der Finite-Elemente-Simulation von einem von der Finite-Elemente-Simulation vorgegebenen Punktraster auf ein für das rekurrente neuronale Netz geeignetes konstantes Punktraster abgebildet (S20) werden.

4. Computerimplementiertes Verfahren nach Anspruch 3, wobei das für das rekurrente neuronale Netz geeignete konstante Punktraster abhängig von einem Bauraum eines vorgegebenen 3D-Druckers ist.

5. Computerimplementiertes Verfahren nach einem der vorhergehenden Ansprüche, wobei das rekurrente neuronale Netz ein Long-Short-Term-Memory-Netzwerk ist.

6. Computerimplementiertes Verfahren nach einem der vorhergehenden Ansprüche, wobei das rekurrente neuronale Netz ein bidirektionales Long-Short-Term-Memory-Netzwerk ist.

7. Computerimplementiertes Verfahren nach einem der vorhergehenden Ansprüche, wobei die jeweiligen Eingabedaten von mindestens einem Sensor erfasst werden.

8. Computerimplementiertes Verfahren nach einem der vorhergehenden Ansprüche, wobei die ausgegebene Temperaturverteilung und die Verformungsdaten bei der additiven Fertigung des Bauteils berücksichtigt werden.

9. Computerimplementiertes Verfahren nach einem der vorhergehenden Ansprüche, wobei eine Bauteilgeometrie des Bauteils in Abhängigkeit der ausgegebenen Temperaturverteilung und der Verformungsdaten überprüft wird und ein Prüfungsergebnis ausgegeben wird (S5).

10. Computerimplementiertes Verfahren nach einem der vorhergehenden Ansprüche, wobei die Bauteilgeometrie des Bauteils in Abhängigkeit der ausgegebenen Temperaturverteilung und der Verformungsdaten optimiert wird.

11. Computerimplementiertes Verfahren nach einem der vorhergehenden Ansprüche, wobei optimierte Druckparameter in Abhängigkeit der ausgegebenen Temperaturverteilung und der Verformungsdaten bestimmt werden.

12. Computerimplementiertes Verfahren nach einem der vorhergehenden Ansprüche, wobei die additive Fertigung des Bauteils in Abhängigkeit der ausgegebenen Temperaturverteilung und der Verformungsdaten in Echtzeit überwacht wird.

13. Vorrichtung (100) zur Bestimmung einer Temperaturverteilung und von Verformungsdaten eines additiv gefertigten Bauteils, umfassend:
- eine erste Eingabeschnittstelle (101), die derart eingerichtet ist, Eingabedaten (INP) einzulesen, wobei die Eingabedaten (INP)
∘ einen Leistungswert eines Druckkopfs eines 3D-Druckers zu einem vorgegebenen Zeitpunkt,
∘ einen Geschwindigkeitswert des Druckkopfs zum vorgegebenen Zeitpunkt,
∘ eine nächstfolgende Position des Druckkopfs nach einem vorgegebenen Zeitschritt und
∘ eine Temperaturverteilung und Verformungsdaten des Bauteils, Leistungswerte, Geschwindigkeitswerte und Positionen des Druckkopfs zu vorhergehenden Zeitpunkten
umfassen,
- eine zweite Eingabeschnittstelle (102), die derart eingerichtet ist, ein trainiertes rekurrentes neuronales Netz (NN) bereitzustellen, das derart trainiert ist, in Abhängigkeit der Eingabedaten (INP) eine Temperaturverteilung und Verformungsdaten (T1, V1) des Bauteils zu bestimmen,
- eine Analyseeinheit, die derart eingerichtet ist, die Temperaturverteilung und die Verformungsdaten (T1, V1) des Bauteils zu einem vorgegebenen Zeitpunkt in Abhängigkeit der Eingabedaten (INP) mittels des trainierten rekurrenten neuronalen Netzes (NN) zu ermitteln,
und
- eine Ausgabeeinheit (104), die derart eingerichtet ist, die ermittelte Temperaturverteilung (T1) und die ermittelten Verformungsdaten (V1) des Bauteils auszugeben.

14. Computerprogrammprodukt, das direkt in einen programmierbaren Computer ladbar ist, umfassend Programmcodeteile, die dazu geeignet sind, die Schritte des Verfahrens nach einem der Ansprüche 1 bis 12 durchzuführen.
